# FASCICULE DE BREVET EUROPEEN

(11) **EP 1 741 915 B1**
(45) Date de publication et mention de la délivrance du brevet: **02.06.2010**
(21) Numéro de dépôt: 06116405.9
(22) Date de dépôt: 30.06.2006
(51) Int. Cl.: F02K 1/28, F02K 1/40, F02K 1/00

(54) **Tuyère à orientation de poussée**
Orientierungsfähige Schubdüse
Nozzle with orientable thrust

(30) Priorité: 30.06.2005 FR 0551857
(43) Date de publication de la demande: 10.01.2007
(73) Titulaire: SNECMA, 75015 Paris (FR)
(72) Inventeur: Daris, Thomas, 75012 Paris (FR); Doussinault, Marc, 77350 Le Mee sur Seine (FR); Page, Alain, 91230 Montgeron (FR); Prouteau, Jackie, 94440 Villecresnes (FR); Schenher, Frédéric, 77720 La Chapelle Gauthier (FR)
(74) Mandataire: David, Daniel

(56) Documents cités:
- EP-A- 1 158 156
- US-A- 4 726 545
- US-A- 5 170 964
- US-A- 5 706 650
- US-A- 6 112 513
- US-A1- 2002 189 232
- US-B1- 6 679 048

## Description

L'invention se rapporte au domaine de la propulsion des aéronefs par éjection d'un flux de gaz, et concerne une tuyère à orientation de poussée.

Pour des avions propulsés par des turboréacteurs, avec pilote ou sans pilote, les drones, à applications militaires, un objectif est la furtivité.

La furtivité est définie notamment par rapport à deux paramètres : la surface équivalent radar (SER) et la signature infrarouge (SIR). La SER est la surface susceptible d'apparaître sur un radar, compte tenu de la géométrie de l'aéronef. La SIR est la signature en chaleur que laisse l'aéronef, notamment au niveau de ses tuyères d'éjection.

Il est préférable, pour diminuer la SER, que l'aéronef ne comporte pas de dérive, ou empennage vertical, à l'arrière du fuselage. Se pose alors le problème du guidage de l'aéronef, notamment pour ce qui est de ses changements de direction. On propose dans ce cas, pour pouvoir gouverner l'aéronef en lacet, d'opérer une vectorisation c'est-à-dire en agissant sur l'orientation du vecteur de poussée.

Assurer le pilotage de l'aéronef en agissant sur l'orientation du jet de gaz issu de la tuyère est déjà connu. Il existe des solutions mettant en oeuvre des moyens mécaniques tel que dans le document US 2002/0189232, ou fluidiques tel que dans le document US 6 112 513 de déviation ou d'orientation du jet. Le pilotage du jet de gaz par injection fluidique dans le divergent de la tuyère est une solution intéressante pour l'application envisagée ci-dessus car il concilie les aspects de vectorisation et de discrétion. De nombreuses études ont déjà été réalisées sur le sujet.

Le document US 2002/0189232 comprend les caractéristiques du préambule de la revendication 1.

Dans le cadre du pilotage de missiles notamment on utilise déjà la technique d'injection fluidique dans le divergent de la tuyère. Le principe consiste à créer une obstruction dans le divergent de la tuyère par une injection de gaz. La déviation du vecteur poussée est alors produite par la déviation de l'écoulement à la traversée de l'onde de choc oblique induite par l'obstruction et par la surpression générée par le décollement de la couche limite au voisinage de l'injection. Cette solution présente l'avantage de ne pas comprendre de pièces mobiles contrairement aux tuyères vectorielles mécaniques. Elle souffre toutefois des inconvénients suivants :

Il faut un prélèvement d'air moteur important (de l'ordre de 5%) pour atteindre des déviations de poussée de 15 à 20°.

On observe des pertes de poussée non négligeables en raison du prélèvement moteur et des pertes à la traversée de l'onde de choc ;

Elle présente un risque de perte d'efficacité de déviation en cas d'impact de l'onde de choc sur la paroi opposée.

Selon une autre technique connue, on procède à une déformation de la ligne sonique. Le principe consiste à obtenir la déviation du vecteur poussée en modifiant la forme de la ligne sonique au col de la tuyère. Cette modification est obtenue par deux injections simultanées : au col sur une paroi et dans le divergent de la paroi opposée dans une zone proche de la section du col. Cette solution présente l'avantage d'éviter la formation d'une onde de choc induisant des pertes de poussée. Toutefois, l'injection au col géométrique induit une modification du col aérodynamique et a donc une influence sur le débit et les performances du moteur. Notamment la marge au pompage du compresseur est réduite. Par ailleurs, l'efficacité du dispositif pour assurer le pilotage en lacet reste à démontrer.

Par ailleurs, on sait assurer le pilotage de la section efficace du col de la tuyère par une injection fluidique au col. L'efficacité d'un tel dispositif a été prouvée expérimentalement et par calcul. On peut ainsi atteindre des restrictions de section efficace de l'ordre de 10% avec un prélèvement moteur de l'ordre de 3%.

Dans le cas d'une tuyère telle que destinée à équiper un drone militaire, on associe un objectif de discrétion SIR et SER au besoin de poussée vectorielle. On est conduit à concevoir des tuyères bidimensionnelles très aplaties, avec un allongement de l'ordre de 5 pour les discrétions SIR et SER et avec une forme extérieure pointue pour la discrétion en SER. Les techniques présentées ci-dessus ont prouvé leur efficacité en matière de déviation du vecteur de poussée pour palier l'absence de dérive. Cependant quand on les met en pratique pour des tuyères adaptées à cette application on constate les difficultés suivantes :

Le pilotage par injection fluidique dans un divergent nécessite une surface d'appui importante pour être efficace. C'est le cas pour des tuyères axisymétriques ou bidimensionnelles à faible allongement mais pas pour les tuyères dans l'application envisagée. Ainsi sur les configurations déjà testées, il apparaît que les surfaces latérales des tuyères sont assez courtes et de faible hauteur. Cela limite fortement l'efficacité d'une injection pariétale.

L'injection au voisinage du col de tuyère entraîne une réduction sensible du coefficient de débit par un effet d'obstruction de la section du col. Cette réduction de la section du col a comme cela a été rapporté plus haut un effet important sur le fonctionnement du générateur de gaz, avec en particulier, une réduction de la marge au pompage du compresseur.

La présente invention a donc pour objectif la réalisation d'un dispositif de pilotage d'un aéronef, notamment en lacet, qui ne présente pas les inconvénients ci-dessus notamment, qui soit efficace et qui soit associé à une maîtrise du débit moteur.

Ce dispositif doit être applicable aux aéronefs mono moteur ou bi moteurs et en particulier aux drones.

Ce dispositif doit être capable d'assurer en continu une vectorisation de faible amplitude sans entraîner une pénalisation des performances du générateur de gaz.

Il doit être capable de fournir une poussée vectorielle importante pour les besoins de pilotage de l'aéronef.

Il doit être capable de limiter la SIR en secteur arrière et travers.

On parvient à réaliser ces objectifs, conformément à l'invention, avec une tuyère à orientation de poussée, conformée de manière à répartir un flux principal de gaz de propulsion issu d'au moins un générateur de gaz en un premier et un second flux pour une éjection dans une première et une seconde demi tuyères, ladite tuyère comportant au moins l'un des deux moyens de pilotage suivants : un moyen de répartition du flux principal dans chacune des deux demi tuyères, et un moyen d'orientation du vecteur de poussée produite par chacune des deux demi tuyères, lesdits deux moyens étant à injection fluidique.

Par demi tuyère, on comprend dans la présente demande une tuyère d'éjection des gaz qui reçoit une partie du flux principal en aval de la turbine. Ce terme n'est pas associé à une forme particulière.

La solution de l'invention présente l'avantage de permettre un contrôle séparé des deux demi vecteurs de poussée en module et en orientation.

Cette solution avec des moyens à injection fluidique présente l'avantage d'être simple et de fonctionner avec un nombre réduit de dispositifs d'injection fluidique, assurant une fiabilité élevée et un coût faible.

En premier lieu, les dites demi tuyères sont disposées pour une orientation du vecteur poussée en lacet. On palie ainsi l'absence de dérive.

Selon une variante, les dites demi tuyères sont disposées pour un pilotage en tangage ou encore la tuyère comprend deux paires de demi tuyères l'une pour l'orientation en lacet l'autre pour l'orientation en tangage.

Conformément à une autre caractéristique, le moyen de pilotage de la répartition des flux comprend des moyens d'injection de fluide au col de chacune des demi tuyères. Plus précisément, le générateur de gaz étant un turboréacteur, les moyens d'injection fluidiques sont alimentés par de l'air pouvant être prélevé au compresseur du générateur. Cette solution est particulièrement avantageuse car elle permet un fonctionnement équilibré dans toutes les phases de vol. Notamment on prévoit un procédé de fonctionnement de la tuyère selon lequel on prélève en continu de l'air au compresseur du générateur.

Conformément à une autre caractéristique, les moyens d'orientation du vecteur de poussée de chacune des deux demi tuyères sont constitués par des moyens d'injection de fluide dans au moins l'une des parois divergentes de chacune des deux demi tuyères.

De préférence, les divergents de part et d'autre de chaque demi tuyère ne sont pas de même longueur, les moyens d'injection de fluide sont disposés sur les parois longues des divergents. On évite ainsi que l'onde de choc déviée ne touche la paroi en vis-à-vis.

Conformément à une autre caractéristique, les demi tuyères sont agencées pour masquer au moins en partie la section du flux principal. On réduit ainsi la SIR.

Conformément à une variante de réalisation, le flux principal est généré par deux générateurs de gaz. Dans ce cas la tuyère comprend de préférence seulement un moyen d'orientation du vecteur de poussée produit par chacune des deux demi tuyères.

L'invention concerne aussi une turbomachine ou un drône comportant une telle tuyère.

On décrit maintenant l'invention plus en détail en référence aux dessins annexés sur lesquels :
- la figure 1 montre une vue de dessus d'un drone équipé d'une tuyère selon l'invention,
- la figure 2 montre la partie tuyère seule vue de dessus,
- la figure 3 représente la tuyère de la figure 2 vue de ¾ arrière,
- la figure 4 est une représentation schématique de la disposition des moyens de pilotage de l'invention dans une demi tuyère,
- la figure 5 illustre le fonctionnement des moyens de pilotage disposés au col,
- la figure 6 illustre le fonctionnement des moyens de pilotage disposés dans le divergent des demi tuyères.

L'aéronef 1 représenté sur la figure est un exemple non limitatif. Il a un nez 2 deux ailes 3 et 4 et est propulsé par un ou deux turboréacteurs non visibles. Il est conformé de manière à présenter des SER et SIR aussi faibles que possible. Sa partie arrière en particulier ne comprend pas de dérive verticale et se termine par une pointe 5 avec un angle au sommet adapté, par exemple de 40°, pour rejeter les ondes radars vers l'infini. La tuyère 10 de l'invention tire partie de cette contrainte en étant bifide. Elle répartit le flux principal issu du canal 12 en entrée en deux flux dans deux canaux symétriques 12A et 12B qui se terminent par deux demi tuyères 14 et 16 à section rectangulaire. Les canaux 12, 12A et 12B ont une forme adaptée pour assurer la séparation de l'écoulement en deux flux mais aussi la transition d'une forme cylindrique à section circulaire ou sensiblement circulaire à une forme à section rectangulaire. Le cas échéant les canaux comprennent un coude supplémentaire pour assurer le masquage de la turbine. Comme on la voit sur les figures ce masquage est déjà assuré au moins en partie par l'écartement entre les demi tuyères 14 et 16.

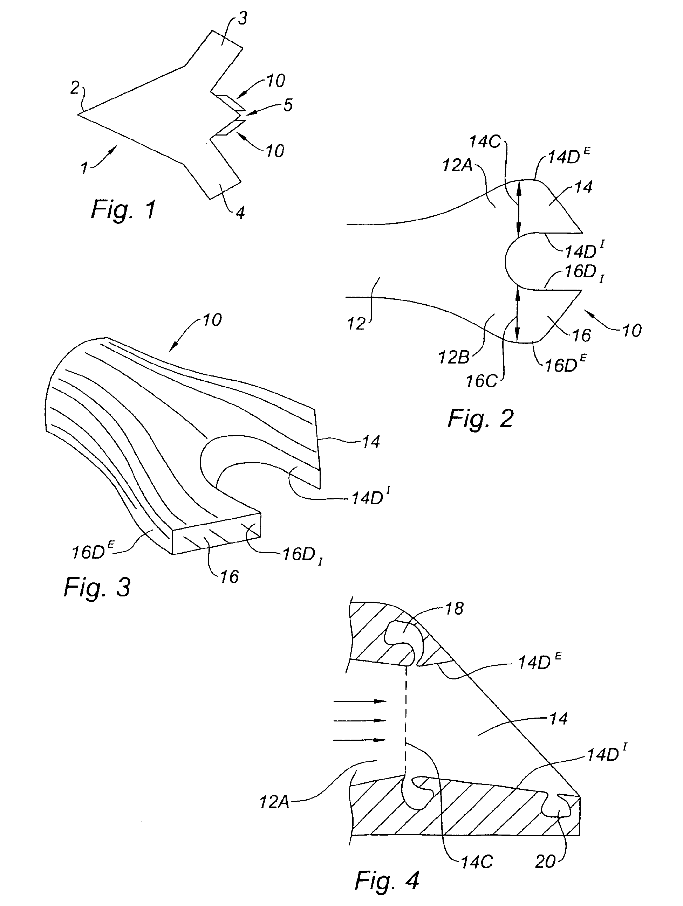

Chacune des demi tuyères est donc constituée d'un col rectangulaire, 14C et 16C respectivement, d'allongement horizontal, rapport largeur/hauteur, élevé, comme on le voit sur la figure 3. L'allongement des tuyères peut être de 2,5. En aval du col, le divergent est court du côté externe 14D^{E} et 16D^{E}. Les parois du côté interne 14D^{I} et 16D^{I} sont plus longues. Cela donne une forme en biseau du bord aval des tuyères. 14 et 16. Les parois supérieures et inférieures sont soit parallèles entre elles soit divergentes.

L'ensemble est de préférence optimisé pour assurer, dans les cas sans injection et sans vectorisation, une poussée transversale de chaque demi tuyère minimale. En effet celle-ci se traduit par une perte de poussée axiale qu'il faut réduire à un minimum. La poussée latérale globale reste nulle en raison de la symétrie du système.

Conformément à l'invention pour assurer le guidage de l'aéronef 1 sans empennage, on prévoit des moyens de pilotage par lesquels on agit sur les deux flux.

La figure 4 est une vue schématique de la demi tuyère 14. Cette tuyère convergente divergente comprend le col 14C et en aval les deux parois divergentes 14D^{I} et 14D^{E}. La tuyère comprend ici un injecteur de fluide 18 disposé sur une paroi au niveau du col et un injecteur de fluide 20 situé sur la paroi 14D^{I} du divergent. L'injecteur est de préférence situé près de l'extrémité du divergent.

De façon symétrique la demi tuyère est équipée d'un injecteur de fluide 18 au col 16C et d'un injecteur de fluide 20 sur la paroi de divergent 16D^{I}

Les injecteurs 18 et 20 sont alimentés avantageusement par de l'air prélevé au compresseur du turboréacteur qui fournit le flux principal.

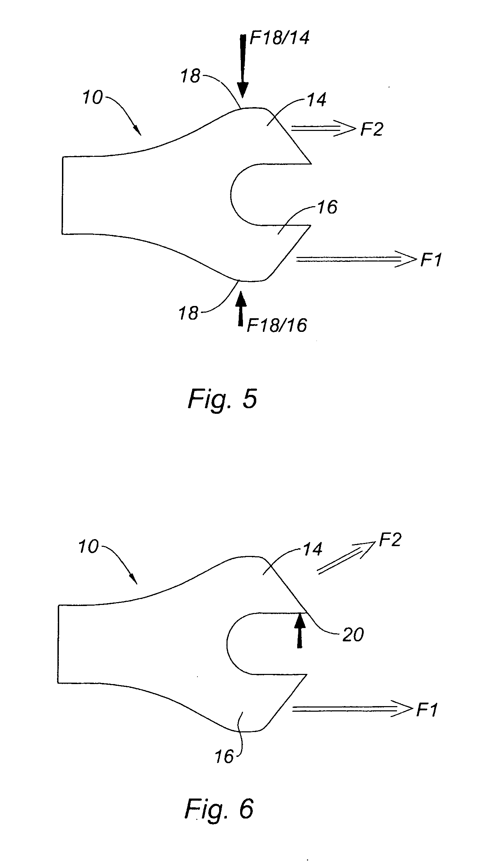

La figure 5 montre le fonctionnement des injecteurs situés au col. Sur cette figure, on a représenté par des flèches 18/14 et 18/16 les injections d'air par les injecteurs 18. Le moment de lacet est créé par le pilotage de la répartition du débit dans chacune des deux demi tuyères 14 et 16 au moyen des injections de fluide aux deux cols. Selon cet exemple la demi tuyère 14 reçoit un fort débit injecté 18/14 et par conséquent subit une importante restriction de la section efficace au col. Inversement la demi tuyère 16 reçoit peu ou pas de débit au col. Il en résulte la création d'un différentiel de poussée axiale F2/F1, droite / gauche ici, et donc un moment de lacet.

On observe cependant qu'une obstruction subite de la tuyère créerait instantanément une augmentation de pression dans le canal et un risque de pompage du compresseur. Conformément à un mode préféré de fonctionnement, on crée une injection permanente nominale. Elle est réalisée à iso débit prélevé de telle sorte que le générateur ne subit pas de variation soudaine au cours de la mission tout en régulant la tuyère à iso section efficace au col totale. Le cycle thermodynamique du moteur est directement optimisé sous cette contrainte de prélèvement constant. De cette façon, le système de régulation de l'air prélevé fonctionne de façon continue et ne connaît pas de phase transitoire de démarrage.

Ainsi ce mode de fonctionnement conforme à l'invention fournit avec un impact faible sur les performances du moteur, une poussée vectorielle qui permet de compenser l'absence d'empennage cellule, notamment pour les régimes de croisières ou transitoires lents.

On décrit maintenant le fonctionnement du dispositif d'injection situé dans le divergent des tuyères 14 et 16 en relation avec la figure 6.

Les injecteurs sont disposés de préférence en extrémité de la paroi longue de divergent. En injectant un fluide dans la tuyère 14, on induit une déviation du vecteur de poussée produite par la tuyère et représenté par la flèche F2. La poussée F1 fournie par la demi tuyère 16 reste axiale puisque rien ne vient perturber sa direction. Il s'ensuit la création d'un moment de lacet par rapport au centre de gravité de l'avion. Ce mode de fonctionnement fournit une poussée vectorielle importante pour assurer le pilotage de l'aéronef, au détriment cependant des performances du générateur. Cette détérioration est toutefois maîtrisée.

On a décrit un mode de réalisation de l'invention. Cependant de nombreuses variantes sont possibles sans sortir du cadre de l'invention. Par exemple on a montré un canal 12 alimenté par un seul générateur de gaz. Dans le cas d'un aéronef bimoteur les deux demi flux d'échappement sont générés par deux moteurs distincts dont la régulation est synchronisée. De préférence on utilise les seuls injecteurs dans le divergent.

Des variantes sur la disposition et le fonctionnement des moyens de pilotage, comprennent la présence d'un seul moyen de pilotage. Il est possible de le faire fonctionner en même temps que l'autre moyen ou séparément.

Selon un mode de réalisation non représenté, les tuyères peuvent être de type fluidique avec éjecteur, c'est-à-dire un flux secondaire débouchant dans ou en aval du canal principal.

Les moyens de pilotage selon l'invention peuvent être combinés en partie avec des moyens mécaniques d'orientation des flux.

## Revendications

1. Tuyère à orientation de poussée conformée de manière à diviser un flux principal de gaz de propulsion issu d'au moins un générateur de gaz en un premier et un second flux pour une éjection dans une première et une seconde demi tuyères (14, 16) **caractérisée par le fait qu'**elle comporte au moins l'un des deux moyens de pilotage suivants : moyen de répartition du flux principal dans chacune des deux demi tuyères et moyen d'orientation du vecteur de poussée produite par chacune des deux demi tuyères, les dits deux moyens étant à injection fluidique (18, 20).

2. Tuyère selon la revendication 1 dont les dites demi tuyères sont disposées pour une orientation du vecteur poussée en lacet.

3. Tuyère selon l'une des revendications précédentes dont les dites demi tuyères sont disposées pour un pilotage en tangage.

4. Tuyère selon les revendications 2 et 3 comprenant deux paires de demi tuyères l'une pour l'orientation en lacet l'autre pour l'orientation en tangage.

5. Tuyère selon la revendication 1 dont le moyen de pilotage de la répartition des flux comprend des moyens d'injection (18) de fluide au col (14C, 16C) de chacune des demi tuyères.

6. Tuyère selon la revendication précédente, le générateur de gaz étant un turboréacteur, dont les moyens d'injection fluidiques sont alimentés par de l'air prélevé au compresseur du générateur.

7. Procédé de fonctionnement de la tuyère selon la revendication précédente comprenant un prélèvement continu au compresseur du générateur.

8. Tuyère selon l'une des revendications 1 à 6 dont le moyen d'orientation du vecteur de poussée produit par chacune des deux demi tuyères est constitué de moyens d'injection de fluide (20) disposés dans au moins l'une des parois (14D, 16D) divergentes de chacune des deux demi tuyères.

9. Tuyère selon la revendication précédente dont les divergents (14D 16D) de chaque demi tuyère ne sont pas de même longueur, les moyens d'injection de fluide sont disposés sur les parois longues (14DI, 16DI) des divergents.

10. Tuyère selon l'une des revendications 1 à 6 dont les demi tuyères sont agencées pour masquer au moins en partie la section du flux principal.

11. Tuyère selon la revendication 1 dont le flux principal est généré par deux générateurs de gaz, et comprenant un moyen d'orientation du vecteur de poussée produit par chacune des deux demi tuyères.

12. Turbomachine comportant une tuyère selon l'une des revendications 1 à 10.

13. Drône équipé d'une tuyère selon l'une des revendications 1 à 10.

## Claims

1. Thrust orienting nozzle, shaped in such a way as to divide a principal propulsion gas flow coming from at least one gas generator into a first flow and a second flow for an ejection in a first half-nozzle (14) and in a second half-nozzle (16), **characterized in that** it comprises at least one of the following two piloting means: a means of dividing the principal flow into each of the two half-nozzles, and a means of orienting the thrust vector produced by each of the two half-nozzles, the said two means being fluidic injection means (18, 20).

2. Nozzle according to claim 1 **characterized in that** the said half-nozzles are disposed for an orientation of the thrust vector in yaw.

3. Nozzle according to one of the preceding claims, **characterized in that** the said half-nozzles are disposed for pitch control.

4. Nozzle according to Claims 2 and 3, **characterized in that** it comprises two pairs of half-nozzles, one for yaw orientation and the other for pitch orientation.

5. Nozzle according to Claim 1, **characterized in that** the means of controlling the division of the flows comprises means (18) of injecting fluid in the throat (14C, 16C) of each of the half-nozzles.

6. Nozzle according to the preceding claim, the gas generator being a turbojet, **characterized in that** the fluid injection means are fed with air taken from the compressor of the generator.

7. Method of operating the nozzle according to the preceding claim, **characterized in that** it comprises a continuous drawing off at the compressor of the generator.

8. Nozzle according to one of Claims 1 to 6, **characterized in that** the means of orienting the thrust vector produced by each of the two half-nozzles is constituted by fluid injection means (20) disposed in at least one of the divergent walls (14D, 16D) of each of the two half-nozzles.

9. Nozzle according to the preceding claim, **characterized in that** the divergent portion walls (14D, 16D) of each half-nozzle are not of the same length, the fluid injection means being disposed on the long walls (14DI, 16DI) of the divergent portions.

10. Nozzle according to one of Claims 1 to 6, **characterized in that** the half-nozzles are arranged to mask at least partially the cross-section of the principal flow.

11. Nozzle according to Claim 1, **characterized in that** the principal flow is generated by two gas generators and that it comprises a means of orientation of the thrust vector produced by each of the two half-nozzles.

12. Turbomachine comprising a nozzle according to one of Claims 1 to 10.

13. Drone equipped with a nozzle according to one of Claims 1 to 10.

## Patentansprüche

1. Orientierungsfähige Schubdüse, angepasst, um einen Hauptfluss von Treibgas, der aus mindestens einem Gasgenerator stammt, in einen ersten und einen zweiten Fluss für einen Ausstoß in eine erste und in eine zweite Halbdüse (14, 16) aufzuteilen, **dadurch gekennzeichnet, dass** sie mindestens eine der folgenden Steuermittel umfasst: Mittel zum Verteilen des Hauptflusses in jede der zwei Hauptdüsen und Mittel zur Orientierung des Schubvektors, der von jeder der Halbdüsen erzeugt wird, wobei die zwei Mittel mit Flüssiginjektion (18, 20) sind.

2. Düse nach Anspruch 1, wobei die Halbdüsen für eine Orientierung des Schubvektors durch Gierbewegung angeordnet sind.

3. Düse nach einem der vorhergehenden Ansprüche, wobei die Halbdüsen für eine Nicksteuerung angeordnet sind.

4. Düse nach Anspruch 2 und 3, umfassend zwei Paar Halbdüsen, das eine für die Gierorientierung, das andere für die Nickorientierung.

5. Düse nach Anspruch 1, wobei das Mittel zur Steuerung der Verteilung der Flüsse Mittel zur Injektion (18) von Flüssigkeit in den Hals (14C, 16C) jeder der Halbdüsen umfasst.

6. Düse nach dem vorhergehenden Anspruch, wobei der Gasgenerator ein Turborstrahltriebwerk ist, wobei die Mittel zur Flüssiginjektion mit Luft, die dem Kompressor des Generators entnommen wird, versorgt werden.

7. Verfahren zum Betrieb der Düse nach dem vorhergehenden Anspruch, umfassend eine kontinuierliche Entnahme vom Kompressor des Generators.

8. Düse nach einem der Ansprüche 1 bis 6, wobei das Mittel zur Orientierung des Schubvektors, der von jeder der zwei Halbdüsen erzeugt wird, Mittel zur Flüssiginjektion (20) umfasst, die in mindestens einer der Wände (14D, 16D) angebracht sind, die aus den zwei Halbdüsen expandieren.

9. Düse nach dem vorhergehenden Anspruch, wobei die Expansionen (14D, 16D) jeder Halbdüse nicht die gleiche Länge haben und die Mittel zur Flüssiginjektion auf den langen Wänden (14DI, 16DI) der Expansionsdüse angebracht sind.

10. Düse nach einem der Ansprüche 1 bis 6, wobei die Halbdüsen angeordnet sind, um mindestens teilweise den Abschnitt des Hauptflusses zu maskieren.

11. Düse nach Anspruch 1, wobei der Hauptfluss von zwei Gasgeneratoren erzeugt wird, und umfassend ein Mittel zur Orientierung des Schubvektors, der von jedem der zwei Halbdüsen erzeugt wird.

12. Turbomtriebwerk, umfassend eine Düse nach einem der Ansprüche 1 bis 10.

13. Drohne, ausgestattet mit einer Düse nach einem der Ansprüche 1 bis 10.
